# EUROPÄISCHE PATENTANMELDUNG

(11) **EP 0 849 490 A2**
(43) Veröffentlichungstag der Anmeldung: **24.06.1998**
(21) Anmeldenummer: 97120433.4
(22) Anmeldetag: 21.11.1997
(51) Int. Cl.: F16F 3/04

(54) **Federpaket**

(30) Priorität: 26.11.1996 DE 19648882
(71) Anmelder: Wilh. Berg GmbH & Co. KG, 58762 Altena (DE)
(72) Erfinder:
(74) Vertreter: Ludewig, Karlheinrich, Dipl.-Ing.

(57) **Zusammenfassung**

Die Erfindung betrifft ein Federpaket (10) mit zwei Trägern (20), an dem mehrere Windungen (12) aufweisende Federn (11) nebeneinander angeordnet sind, hierbei weist der Träger (20) einen Befestigungsabschnitt (10) für das Federpaket (10) auf. Erfindungsgemäß weisen zwei benachbarte Windungen (12) voneinander einen Abstand (21) auf, in diesen Abstand 21 greifen Bereiche eines Trägers 20 zur Halterung der Windungen 12 an dem Träger, wobei sich wenigstens eine der beiden Windungen 12 auf dem Träger 20 abstützt.

## Beschreibung

Die Erfindung betrifft ein Federpaket, an dessen Enden Befestigungsabschnitte zur Halterung des Federpaketes vorgesehen sind, mit zwei Trägern, die jeweils den Befestigungsabschnitt aufweisen, wobei zwischen den beiden Trägern mehrere Windungen aufweisende Federn nebeneinander angeordnet sind, hierbei sind die Federn an den Trägern befestigt. Federpakete dienen beispielsweise dazu, das Öffnen und Schließen von Garagentoren zu erleichtern, hierbei sind die Federn des Federpaketes bei geschlossener Garagentür gespannt, während sie beim Öffnen der Garagentore unter teilweisem Verbrauch ihrer Federkraft das Öffnen erleichtern. Das eine Ende des Federpaketes ist an einem in der Mitte des Garagentores angebrachten Hebelarm befestigt, während das andere Ende unten am Fuß des Garagentores stationär befestigt wird. An beiden Seiten des Garagentores ist jeweils mindestens ein Federpaket vorgesehen. Die Federpakete bestehen aus mehreren einzelnen Federn, um so zu verhindern, daß bei einem Bruch einer Feder die ganze Anlage nicht mehr bedienbar ist bzw. das Tor auf die Bedienungsperson abstürzt. Bekannte Ausführungen weisen als Träger einen Halter auf, in dem in Öffnungen die hakenartig abgebogenen Endungen der Federn eingehängt werden. Es hat sich gezeigt, daß durch das Abbiegen der Federenden zu einem Haken vorprogrammierte Bruchstellen entstehen, da in einer Vielzahl von Störfällen der Bruch der Feder gerade am Hakenende erfolgt.

Es ist auch vorgeschlagen worden, die Zylinderfedern des Paketes derart zu halten, daß ein schraubenähnlicher Gegenstand in die Feder hineingeschraubt wird, um so eine Halterung zu gewährleisten.

Aufgabe der Erfindung ist es daher, ein Federpaket der eingangs genannten Art so zu gestalten, daß zwischen zwei Windungen einer Feder unmittelbar der Träger eingeführt wird, daß sich auf dem Träger eine Windung großflächig abstützen kann, ohne daß befürchtet werden muß, daß Bruchstellen auftreten. Darüber hinaus soll die Montage einfach und kostensparend durchführbar sein. Dies geschieht erfindungsgemäß dadurch, daß zwei benachbarte Windungen einer Feder voneinander im Abstand angeordnet sind und in diesem durch den Abstand gebildeten Raum Bereiche des Trägers eingreifen und daß sich wenigstens eine der beiden Windungen auf dem Träger abstützt. Dadurch, daß unmittelbar bei der Herstellung der Federwindungen ein Abstand zwischen zwei Windungen eingehalten wird, ergibt sich überaus einfach die Montage. Denn nunmehr kann die Feder mit dem Abstandsraum unmittelbar auf dem Träger aufgeschoben werden, wobei entweder bei der Montage beide Windungen sich leicht an dem Träger abstützen oder aber nur die eine Windung aufliegt, so daß leicht ein sicheres Federpaket gebildet wird, das noch mit Schutzrohren umgeben werden kann. Vorteilhaft ist es hierbei, wenn in Draufsicht auf den Träger die Windungen der Feder innerhalb der Abmessungen des Trägers liegen, um so einen sicheren Halt zu gewährleisten. Hierbei empfiehlt es sich, daß der Träger an einem vorzugsweise kastenförmigen Rahmen derart umrandet ist, daß die Federn auf dem Träger gegen ein Abgleiten gesichert sind. Sobald der Rahmen um den Träger angeordnet ist, liegen die Federn sicher an dem Träger fest.

Bei einem besonderen Ausführungsbeispiel der Erfindung ist der Träger aus einem Winkelteil aufgebaut. Hierbei trägt der eine Schenkel die Federn, während der andere Schenkel dem Befestigungsabschnitt des Federpaketes angepaßt ist. Bei einem besonderen Ausführungsbeispeil der Erfindung ist der Träger aus spiegelbildlichen angeordneten Winkelteilen ausgebildet, die aneinander befestigt sind. Hierdurch können auf beiden Seiten des Befestigungsabschnittes Federn angeordnet werden. Bei einem anderen Ausführungsbeispiel könnte der Träger auch T-förmig gestaltet sein.

Vorzugsweise umfaßt der sich auf dem Träger abstützende Windungsbereich mindestens eine Federwindung, um so einen sicheren Halt zu gewährleisten. Um die Auflagefläche der Windungen zu vergrößern, ohne daß die Steigung der Windungen sich ändern muß, empfiehlt es sich, daß der Träger im Auflagebereich der Windungen eine der Steigung der Windung entsprechende muldenförmige Vertiefung aufweist, hierbei ist die Tiefe der Mulde im Bereich der Ausnehmung größer als an ihrem anderen Ende.

Empfehlenswerterweise ist der Träger auf seiner Oberfläche und Unterfläche mit Erhöhungen versehen, die bis zu den Ausnehmungen geführt sind und an die Teile der Windungen anliegen. Diese Maßnahme gestattet in einfacher Weise in Festlegen der Feder an dem Träger, da die Erhöhungen der Feder einen zusätzlichen Halt geben. Günstigweise sind die Erhöhungen als Prägungen in dem Träger ausgebildet.

Bei einem besonderen Ausführungsbeispiel der Erfindung ist in dem Befestigungsabschnitt eine Schraubmutter eingelassen, in die zur Halterung des Trägers eine Gewindestange eingreift. Hierbei wird die Gewindestange mit ihrem anderen Ende an dem Hebelarm oder Fuß des Garagentores befestigt.

Günstigerweise weist der Träger wenigstens auf seiner einen Stirnseite einen Vorsprung auf, gegen den der Windungsbereich der Feder anstößt. Durch diesen anstoßenden Windungsbereich wird eine sichere Halterung der Feder am Träger gewährleistet, da der Vorsprung die Feder an der Windung festhält. Vorteilhafterweise weist hierbei der Vorsprung eine Auflauframpe auf, über die eine Federwindung herübergeschoben ist, so daß in diesem Falle die Bewegung der Feder auf den Träger leicht durchzuführen ist, während die Feder nicht mit ihrer Windung über den Vorsprung zurückgezogen werden. Empfehlenswerterweise liegt der Vorsprung in Draufsicht innerhalb der Federwindung um so zu gewährleisten, daß eine sichere Lagerung der Feder am Träger gewährleistet ist.

Bei einem besonderen Ausführungsbeispiel der Erfindung ist der Vorsprung als Stanzbiegung des Trägers ausgebildet. Durch die Stanzung ergibt sich auf der einen Seite des Vorsprunges eine sichere Rückhaltefläche die gegen die Windung anliegt. Durch die Abbiegung ist die Auflauframpe direkt geschaffen, so daß die Federwindung leicht über den Vorsprung fuhrbar ist. Insgesamt ergibt sich eine wohlfeile Herstellung.

Auf der Zeichnung ist der Erfindungsgegenstand in mehreren Ausführungsbeispielen dargestellt. So zeigt
- Fig. 1: einen Schnitt nach der Linie I - I der Fig. 2 durch ein Federpaket,
- Fig. 2: die Draufsicht auf das Federpaket,
- Fig. 3: ein weiteres Ausführungsbeispiel des Federpaketes,
- Fig. 4: einen Ausschnitt in der Seitenansicht eines Federpaketes,
- Fig. 5: eine Draufsicht auf ein weiteres Ausführungsbeispiel des Trägers,
- Fig. 6: eine Vorderansicht des Trägers,
- Fig. 7: einen Querschnitt durch ein Federpaket,
- Fig. 8: eine Draufsicht auf den einen Träger des Federpaketes.

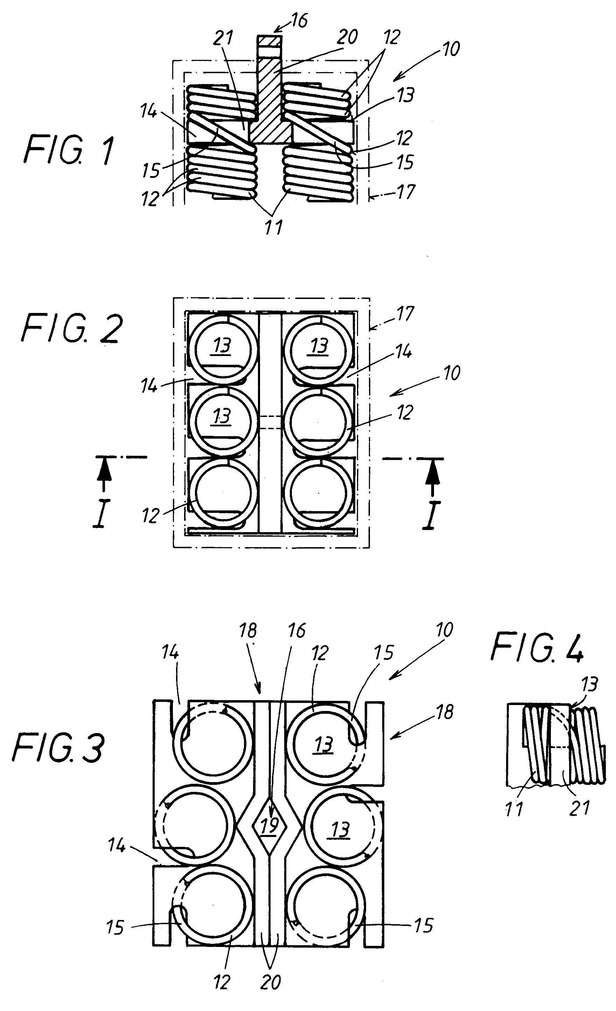

In Fig. 1 ist das eine Ende des Federpaketes 10 zu sehen. Es weist einen Träger 20 auf sowie mehreren nebeneinander angeordneten Schraubfedern 11. Jede der Schraubfedern trägt an ihrem Ende einen Abstandsraum 21, der dadurch gebildet wird, daß zwei benachbarte Windungen 12 einer Schraubfeder 11 im Abstand voneinander angeordnet sind, wobei die beiden Windungen über ein Windungsabschnitt 15 ineinander übergehen. Der Abstandsraum 21 weist so eine große Höhe auf, daß der Träger 20 der Schraubenfedern in den Abstandsraum 21 hingeschoben werden kann bzw. die Federn mit dem Abstandsraum 21 auf den Träger. Bei dem gezeigten Ausführungsbeispiel stützt sich die obere Windung 12 auf dem Träger ab, der somit den Auflagenbereich 13 des Trägers bildet.

Der Träger 20 weist noch einen Befestigungsbereich 16 auf. Mit diesem Befestigungsbereich wird das Federpaket 10 aufgehängt.

Wie aus Fig. 1 zu erkennen ist, beträgt die Zahl der Windungen oberhalb des Auflagebereiches 13 drei.

Der Auflagenbereich 13 des Trägers 20 weist Ausnehmungen auf. In diese Ausnehmungen 14 greift die Windungsverbindung 15 ein, so daß die Schraubenfeder vollständig auf den Träger aufgeschoben werden kann. In dem gezeigten Ausführungsbeispiel nach Fig. 1 ist der Träger T-förmig gestaltet.

Auf den Träger kann eine kastenförmige Umrandung 17 aufgesetzt werden. Diese verhindert, daß im unbelasteten oder belasteten Zustand die Schraubfedern von dem Auflagebereich 13 herabrutschen können.

Es sei hier soviel bemerkt, daß an dem unteren Ende des Federpakates ein ähnlicher Träger vorgesehen ist, so daß das Federpaket zwischen zwei Befestigungen gespannt gehaltert wird.

Bei dem Ausführungsbeispiel nach Fig. 3 ist der Träger 20 aus zwei Winkelteilen 18 aufgebaut, die mit ihrem einen Schenkel aneinander befestigt sind, während der andere Schenkel der beiden Winkelteile die Auflagebereiche 13 für die Windungen 12 der Schraubfedern 12 bildet.

In der Mitte des Trägers 20 ist eine rautenartige Öffnung 19 vorgesehen, die ein Befestigungsteil, nicht dargestellt, zur Halterung des Federpaketes aufnimmt. Hierdurch bedingt liegen die einzelnen Schraubfedern nicht genau in einer Reihe ausgerichtet. Wie aus Fig. 3 in Verbindung mit Fig. 1 zu erkennen, liegt die eine Windung 12 der Windungen aufweisende Schraubfeder 11 auf dem Auflagebereich, während die benachbarte andere Windung im Abstand unterhalb des Trägers vorgesehen ist, lediglich die Verbindung zweier Windungen greift durch die Ausnehmung 14 hindurch. In Fig 3 ist hierbei die obere Windung nicht vollständig durchgezeichnet, um das Eingreifen und Durchgreifen der Verbindung durch die Ausnehmung besser zeigen zu können.

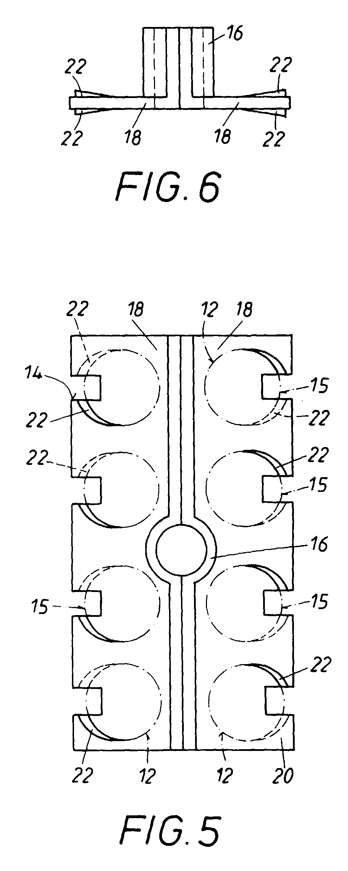

Das Ausführungsbeispiel nach Fig. 5 und 6 besteht wiederum aus einem Träger 20, an dem Federn befestigbar sind. Bei diesem Ausführungsbeispiel sind acht Federbefestigungsstellen vorgesehen und zwar jeweils vier auf den beiden Winkelteilen 18.

Die Befestigungsstelle 16 weist eine nicht dargestellte Schraubmutter auf, in der eine Gewindestange zur Halterung des Federpaketes einschraubbar ist.

Um ein Verrutschen oder Verschieben nach dem Einsetzen der Federn zu verhindern, ist eine Erhöhung 22 an dem Träger vorgesehen. Diese Erhöhung erstreckt sich auf der Ober- und Unterseite des Trägers 20. Mit seiner Windung liegt die Feder hierbei an der Erhöhung 22 an und zwar derart, dass der Abschnitt 15, der zwei benachbarte Windungen verbindet, von denen die eine auf der Oberseite und dem die andere auf die Unterseite des Trägers liegt, mit seinem einen Ende an der Erhöhung 22 auf der Oberseite des Trägers 20 vorgesehen ist und mit dem anderen Ende an der Erhöhung 22 an der Unterseite des Trägers anstösst.

Die Erhöhungen sind so ausgebildet, dass sie bis zu der Ausnehmung 14 in dem Winkelteil 18 geführt sind.

Der Windungsabschnitt 15 hat somit einen sicheren Halt. Aus Fig. 6 ist ersichtlich, dass die Erhöhung 22 auf beiden Seiten des Winkelteiles 18 des Trägers vorgesehen ist. Die Erhöhungen 22 dienen als Schutz und Halterung für die Federn, damit diese nicht vom Träger herabrutschen können, beispielsweise dann, wenn eine Feder reißen oder durch einen Erschütterungsschlag eine Belastung auf die Feder eintritt Die Höhe der Erhöhungen 22 entspricht etwa der Dicke der Schenkel der beiden winkelförmigen Teile. Außerdem wird die Auflagefläche der Windungen an dem Träger größer, so daß eine sichere Kraftverteilung erfolgen kann.

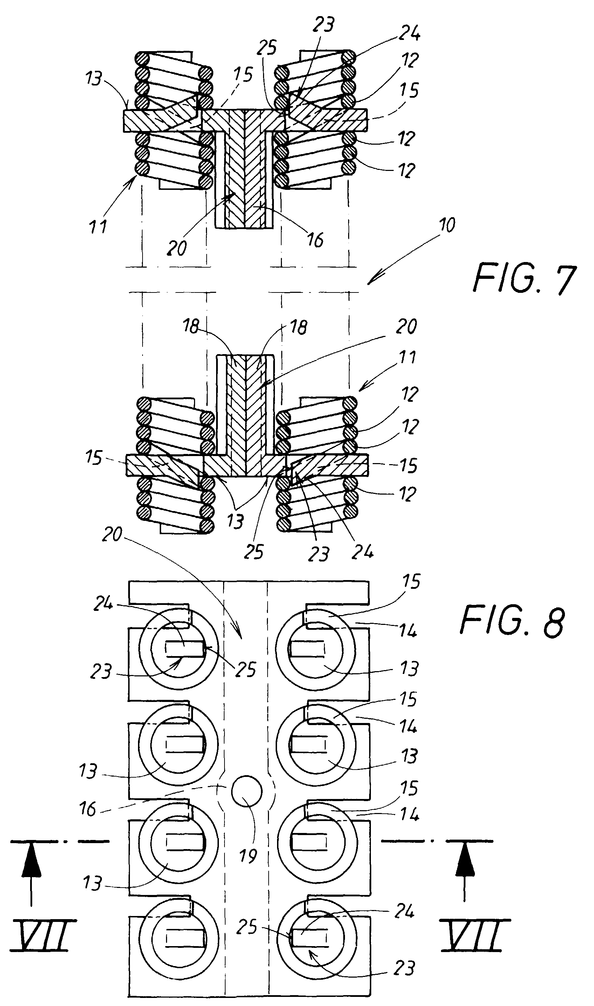

Bei dem Ausführungsbeispiel nach den Fig. 7 und 8 ist eine besondere Rückhaltesicherung vorgesehen, die durch einen Vorsprung 23 gebildet wird. Hierbei ist für jede Feder ein solcher Vorsprung vorgesehen. Der Vorsprung ist als Stanzbiegung an dem Träger 20 vorgesehen. Die Stanzbiegung ist hierbei so erfolgt, daß die Feder über eine Auflauframpe 24 gebildet wird. Bei der Befestigung der Feder kann die Windung über den Vorsprung 23 geschoben werden, bis das Vorsprungsende als Haltefläche 25 die Windung hintergreift. Die übrige Anordnung des Ausführungsbeispieles kann, wie bereits beschrieben, ausgebildet sein. In der Mitte ist wiederum der Befestigungsabschnitt 16 vorgesehen, an dem das Federpaket 10 eingespannt wird. Zur Klarstellung wurde bei diesem Ausführungsbeispiel auch das untere Ende des Federpaketes eingezeichnet, um so deutlich zu machen, wie die Befestigung des Federpaketes erfolgt.

Der Befestigungsabschnitt 16 mit seinen Winkelteilen liegt dabei zwischen den beiden Federreihen, wie Fig. 8 zeigt. Für den Abstandsraum zweier Windungen zur Festlegung an den Träger ist wiederum eine Ausnehmung 14 versehen, durch die sichergestellt wird, daß die Federn innerhalb der Umrißlinien des Trägers liegen.

Die Anordnung des Vorsprunges muß so erfolgen, daß dieser mit seiner Haltefläche innerhalb der Federwindungen liegt, so daß ein sicherer Schutz gegen Herabziehen gewährleistet ist.

Wie bereits erwähnt, sind die dargestellten Ausführungsformen des Federpaketes nur beispielsweise Verwirklichungen der Erfindung. Diese sind nicht darauf beschränkt, vielmehr sind noch mancherlei Abänderungen und Anwendungen möglich. Statt der sechs einzelnen Schraubfedern, die an dem Träger angeordnet sind, könnten auch mehr oder weniger vorgesehen sein. Der Träger könnte auch lediglich eine ungerade Zahl von Schraubfedern aufnehmen, um so eine bessere Lastverteilung zu erreichen. Die auf dem Auflagebereich des Trägers sich abstützenden Windungen werden sich bei einer Belastung des Federpaketes leicht verformen. Um diese Verformung zu vermeiden, könnte der Träger auch muldenartige Vertiefungen aufweisen, die den Windungen, insbesondere der Steigung der Windungen angepaßt ist, so daß eine möglichst große Auflagefläche erreicht wird. Nachzutragen bleibt hier noch, daß der Vorsprung so gerichtet ist, daß er von der Hauptfeder wegweist. Er könnte jedoch auch in Richtung der eigentlichen Feder weisen. Hierzu würde es sich empfehlen, wenn dann die Haltefläche größer würde. Weiter ist es auch möglich, daß zwei Vorsprünge für eine Feder vorhanden sind. Hierbei würde dann der eine Vorsprung von der Hauptfeder wegweisen, während der andere Vorsprung zu der eigentlichen Feder weist. Mit anderen Worten der Vorsprung für jede Feder könnte sowohl auf der Oberseite gemeinsam mit einem Vorsprung auf der Unterseite vorhanden sein. Im übrigen sei noch darauf hingewiesen, daß unmittelbar bei der Herstellung der Feder beim Wickeln der Abstand zweier benachbarter Windungen hergestellt werden kann, in dem kurzfristig die Steigung beim Federwickeln geändert wird.

### Bezugszeichenliste:

- 10: Federpaket
- 11: Schraubfeder
- 12: Windung einer Schraubfeder
- 13: Auflagebereich
- 14: Ausnehmung in 20
- 15: Abschnitt zweier benachbarter einen Abstand aufweisende Windungen
- 16: Befestigungsabschnitt von 20
- 17: kastenförmige Umrandung
- 18: Winkelteil
- 19: Durchbruch
- 20: Träger
- 21: Abstandsraum zwischen zwei Windungen
- 22: Erhöhungen
- 23: Vorsprung
- 24: Auflauframpe
- 25: Haltefläche

## Patentansprüche

1. Federpaket (10), an dessen Enden Befestigungsabschnitte (16) zur Halterung des Federpaketes (10) vorgesehen sind, mit zwei Trägern (20), die jeweils den Befestigungsabschnitt (16) aufweisen, wobei zwischen den beiden Trägern (20) mehrere Windungen (12) aufweisende Federn (11) nebeneinander angeordnet sind, hierbei sind die Federn (11) an den Trägern (20) befestigt,
**dadurch gekennzeichnet,**
daß zwei benachbarte Windungen (12) einer Schraubfeder (11) voneinander im Abstand angeordnet sind und in diesen durch den Abstand gebildeten Raum (21) Bereiche des Trägers (20) eingreifen und daß sich wenigstens eine der beiden Windungen (12) auf dem Trägerbereich (13) abstützt.

2. Federpaket nach Anspruch 1, dadurch gekennzeichnet, daß die Verbindung zwischen den zwei in Abstand (21) angeordneten Windungen (12) in einer Ausnehmung (14) des Trägers (20) liegen.

3. Federpaket nach Anspruch 1 oder 2, dadurch gekennzeichnet, daß in Draufsicht auf den Träger (20) die Windungen (12) der Feder (11) innerhalb der Abmessungen des Trägers (20) liegen.

4. Federpaket nach Anspruch 3, dadurch gekennzeichnet, daß der Träger (20) von einem vorzugsweise kastenförmigen Rahmen (17) derart umrandet ist, daß die Federn (11) auf dem Trägerbereich (13) gegen ein Abgleiten gesichert sind.

5. Federpaket nach einem der Ansprüche 1 bis 4, dadurch gekennzeichnet, daß der Träger (20) aus einem Winkelteil (18) aufgebaut ist, hierbei trägt der eine Schenkel des Winkelteiles (18) die Federn und der andere Schenkel den Befestigungsabschnitt (16) des Federpaketes.

6. Federpaket nach einem der Ansprüche 1 bis 5, dadurch gekennzeichnet, daß der Träger (20) aus zwei spiegelbildlich zueinander angeordneten Winkelteilen aufgebaut ist, sie aneinander befestigt sind.

7. Federpaket nach einem der Ansprüche 1 bis 6, dadurch gekennzeichnet, daß der sich auf den Träger (29) abstützende Windungsbereich wenigstens drei Federwindungen (12) umfaßt.

8. Federpaket nach einem der Ansprüche 1 bis 7, dadurch gekennzeichnet, daß der Träger im Auflagebereich (13) der Windungen (12) eine der Steigung der Windungen (12) entsprechende Vertiefungen aufweist.

9. Federpaket nach einem der Ansprüche 1 bis 8, dadurch gekennzeichnet, daß der Träger (20) auf seiner Oberfläche und/oder Unterfläche Erhöhungen (22) aufweist, die zu den Ausnehmungen /14) geführt sind und an die Teile der Windungen (12) anliegen.

10. Federpaket nach Anspruch 9, dadurch gekennzeichnet, daß die Erhöhungen (22) als Prägungen im Träger ausgebildet sind.

11. Federpaket nach einem der Ansprüche 1 bis 10, dadurch gekennzeichnet, daß in dem Befestigungsabschnitt (16) eine Schraubmutter eingelassen ist, in die zur Halterung des Trägers (20) eine Gewindestange eingreift.

12. Federpaket nach einem der Ansprüche 1 bis 11, dadurch gekennzeichnet, daß der Träger (20) wenigstens auf seiner einen Stirnseite einen Vorsprung (23) aufweist, gegen den ein Windungsbereich der Feder (11) anstößt.

13. Federpaket nach Anspruch 12, dadurch gekennzeichnet, daß der Vorsprung (23) eine Auflauframpe (24) aufweist.

14. Federpaket nach Anspruch 12 oder 13, dadurch gekennzeichnet, daß der Vorsprung (23) in Draufsicht innerhalb der Federwindung (12) liegt.

15. Federwindung nach einem der Ansprüche 12 bis 14, dadurch gekennzeichnet, daß der Vorsprung (23) als Stanzbiegung des Trägers (20) ausgebildet ist.
